# EUROPEAN PATENT APPLICATION

(11) **EP 1 816 866 A1**
(43) Date of publication of application: **08.08.2007**
(21) Application number: 05785932.4
(22) Date of filing: 20.09.2005
(51) Int. Cl.: H04N 7/00

(54) **CAMERA SHAKE CORRECTING DEVICE**

(30) Priority: 28.10.2004 JP 2004314643
(71) Applicant: SHARP KABUSHIKI KAISHA, Osaka-shi, Osaka 545-8522 (JP)
(72) Inventor: HAYASHI, Hiroyuki, Chiba-Shi, Chiba, 262-0021 (JP)
(74) Representative: Müller, Frithjof E.
(86) International application number: PCT/JP2005/017316
(87) International publication number: WO 2006/054387

(57) **Abstract**

Methods for realizing a video blur detecting function include methods of detecting a video blur by means of a sensor such as an angular velocity sensor and methods of detecting it by means of a sensor and motion prediction of moving picture encoding. Use of a sensor is disadvantageous in cost, mounting volume, and shock resistance, and it is difficult to mount the video blur detecting function in a device such as a portable telephone. When camera shake correction is detected by using only motion prediction of moving picture encoding, the average or median of the whole is used by using motion prediction of the whole encoding units constituting the frame, and therefore the accuracy of camera shake detection is low. According to the invention, a video device comprising a video signal acquiring section, a video signal encoding section, an intermediate information comparing section, a video blur value detecting section, and an encoding unit weighting determining section is provided.

## Description

### BACKGROUND OF THE INVENTION Field of the Invention

The present invention relates to an apparatus and a method for detecting image blurring.

### Description of the Related Art

In recent years, the growing popularity of imaging apparatuses such as video cameras has promoted their use in homes etc. Many imaging apparatuses such as video cameras are provided with correcting functions for camera shake. The correcting function for camera shake normally includes detecting function for camera shake and correcting function for camera shake. As a method for implementing said detecting function for camera shake, the method of detection by means of sensor such as angular velocity, or the method by means of sensor and motion prediction in moving image coding (Jpn. unexamined patent publication No. 2001-24932).

However, in the prior art, the sensor is essential for the detection of motion of the imaging apparatus. This makes it difficult to equip the correcting function with a device such as a mobile phone due to the high cost, large size, and the problem of impact-resistance. Further, in the case of detecting camera shake only by using motion prediction in moving image coding, average values or medium values of motion prediction of all units of coding configuring a screen are used, so that the accuracy in detecting camera shake is insufficient.

### SUMMARY OF THE INVENTION

In order to solve the above deficiencies, an imaging apparatus, comprising an acquisition unit for image signal, which acquires an image signal, a coding unit for image signal, which performs coding of said image signal, a comparing unit for intermediate information, which compares intermediate information of respective units of coding, which is generated from the image signal, and is used for said coding, a detecting unit for amount of image blurring, which detects amount of blurring of the image signal acquired by said acquisition unit for image signal by means of weighting of said intermediate information, and a determination unit for weight of unit of coding, which determines weight of respective units of coding in said detecting unit for amount of image blurring based on the comparison result by said comparing unit for intermediate information, will be provided. In addition, the imaging apparatus may comprise a decoding unit for image signal, which is able to perform decoding of coded image signal. This makes it possible to determine weight of respective units of coding upon decoding in addition to coding. In addition, the imaging apparatus may determine weight of respective units of coding based on amount of code of respective units of coding when determining the weight of respective units of coding by comparing intermediate information of respective units of coding, or based on evaluated value, which is acquired by carrying out orthogonal transformation of texture of the respective units of coding, and integration for exposing high-frequency component of the transformed component. Alternatively, the weight may be determined, so that the value of intermediate information used for inter-frame prediction is an inverse of the value of intermediate information used for intra-frame prediction, in which same weighting value is used for the values of the intermediate information.

According to the imaging apparatus of the present invention, detection of image blurring is carried out by means of intermediate information of respective units of coding generated upon coding of image signal without a sensor for detecting motion of the imaging apparatus, so that it becomes possible to install a function of correcting camera shake on a device such as a mobile phone. Moreover, weighting of respective units of coding enables selecting a unit of coding optimum for correcting camera shake, so that it becomes possible to efficiently provide the function of accurate correction of camera shake.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Fig. 1 is a functional block diagram explaining the first embodiment;
Fig. 2 is a diagram explaining coding type of frames;
Fig. 3 is a diagram explaining differences between images included in respective units of coding;
Fig. 4 is a diagram explaining differences between motion vectors;
Fig. 5 is a diagram explaining differences between images due to the differences between the motion vectors;
Fig. 6 is a flow chart explaining the processing flow of the first embodiment;
Fig. 7 is a functional block diagram explaining the second embodiment;
Fig. 8 is a functional block diagram explaining another example of the second embodiment;
Fig. 9 is a flow chart explaining the processing flow of the second embodiment;
Fig. 10 is a functional block diagram explaining the third embodiment;
Fig. 11 is a flow chart explaining the processing flow of the third embodiment;
Fig. 12 is a functional block diagram explaining the fourth embodiment;
Fig. 13 is a table showing coefficients by which components acquired by orthogonal transformation of images included in units of coding are multiplied;
Fig. 14 is a functional block diagram of the determination means for inverse;
Fig. 15 is a table showing weights which are for weighting by using inverse relation;
Fig. 16 is a flow chart explaining the processing flow of the fourth embodiment;
Fig. 17 is a flow chart explaining the processing flow of determination of an evaluated value;
Fig. 18 is a flow chart explaining the processing flow of calculation of an inverse;
Fig. 19 is a functional block diagram explaining the fifth embodiment; and
Fig. 20 is a flow chart explaining the processing flow of the fifth embodiment.

### DETAILED DESCRIPTION OF THE INVENTION

Embodiments of the present invention will be described hereinbelow with reference to the drawings. The present invention is not to be limited to the above embodiments and able to be embodied in various forms without departing from the scope thereof.

### (First embodiment)

According to an imaging apparatus of the first embodiment, detection of image blurring is carried out by means of intermediate information of respective units of coding generated upon coding of image signal. In addition, in order to select a unit of coding optimum for correcting camera shake, weighting of respective units of coding is carried out.

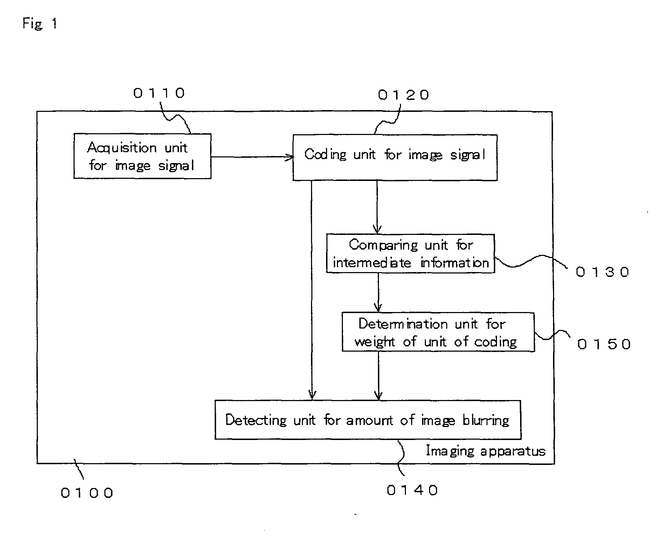

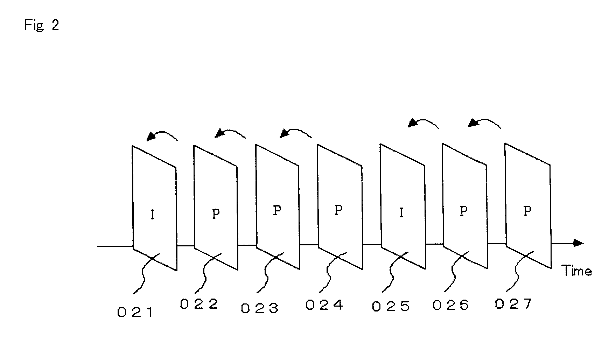

Fig. 1 is a functional block diagram explaining the first embodiment. In Fig. 1, the imaging apparatus (0100) comprises an acquisition unit for image signal (0110), a coding unit for image signal (0120), a comparing unit for intermediate information (0130), a detecting unit for amount of image blurring (0140), and a determination unit for weight of unit of coding (0150). The acquisition unit for image signal (0110) acquires an image signal. For example, the image signal corresponds to a signal inputted from an inputting unit for image signal, not indicated in Fig. 1, comprising an image sensor such as a CCD or a CMOS image sensor, and an image sensor driving circuit. The coding unit for image signal (0120) performs coding of said image signal. Examples of the coding of image signal include H. 263 for images in communication such as video phone or teleconference, MPEG-1 for images in storage media such as CD-ROM, MPEG-2 for images in DVD or in digital telecast, and MPEG-4 for images in analog line communication or in mobile communication. The above coding is carried out based on motion-compensation or on orthogonal transformation. The comparing unit for intermediate information (0130) compares intermediate information of respective units of coding, which is generated from the image signal, and is used for said coding. The unit of coding may be a block including NxM pixels, or a macro block consisting of 6 blocks, including 4 blocks for brightness and 2 blocks for color difference. Examples of the intermediate information include motion vector, coding type of frame, amount of code, coefficient acquired by orthogonal transformation of images included in the respective units of coding, quantized coefficient, and information used for coding such as code processed by variable length coding. The intermediate information may be a combination of any of them. The above intermediate information is generated based on the image signal. Note that the intermediate information of the respective units of coding are different from each other according to the type of coding. For example, in the case of intra-frame prediction as the I frames (021 and 025) of Fig. 2, images included in the respective units of coding are orthogonal transformed, and the coefficient acquired by the orthogonal transformation is quantized. After that, coding of the quantized coefficient is carried out. According to the above process, the intermediate information in the case of intra-frame prediction is acquired. Meanwhile, in the case of inter-frame prediction as the P frames (022, 023, 024, 026 and 027) of Fig. 2, at the outset, an image including NxM pixels, which is similar to the image included in the unit of coding, is selected from the frame used for the prediction, and difference between the position of the unit of coding and the position of the image including NxM pixels of the frame used for the prediction is acquired as motion vector. Subsequently, the difference between the value of the code included in the unit of coding and the value of the code included in the unit of coding of the frame used for the prediction, and the difference value is orthogonal transformed, and the coefficient acquired by the orthogonal transformation is quantized. Further, the coefficient acquired by the quantization is processed by variable length coding, and is multiplexed by the motion vector, so that the coding is completed. According to the above process, the intermediate information in the case of inter-frame prediction is acquired. In the case of inter-frame prediction, differently from the case of intra-frame prediction, coding of the difference value of the unit of coding is carried out. Further, in the case of intra-frame prediction, since a preceding frame and a subsequent frame are not used, the motion vector is not added to the unit of coding. In this case, interpolation by means of the vectors of corresponding units of coding of the preceding frame and of the subsequent frame is carried out, so that the motion vector of the unit of coding is determined.

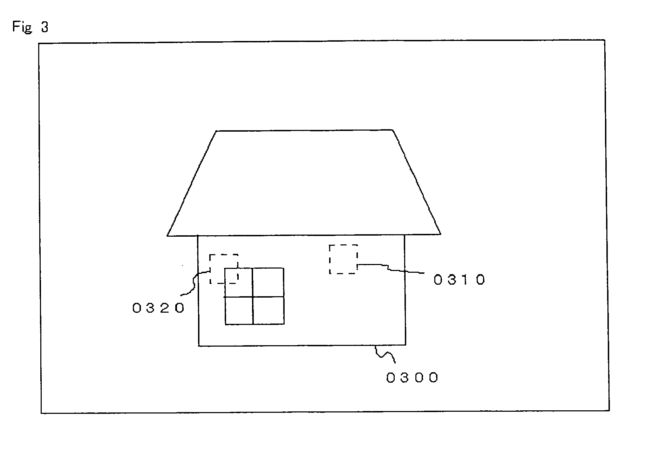

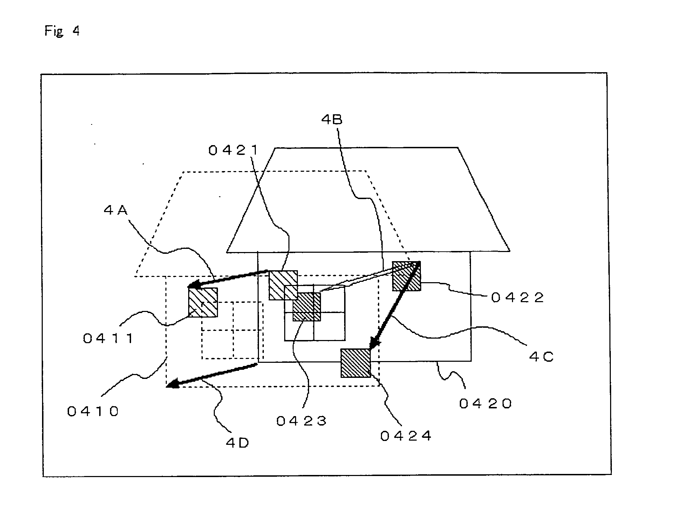

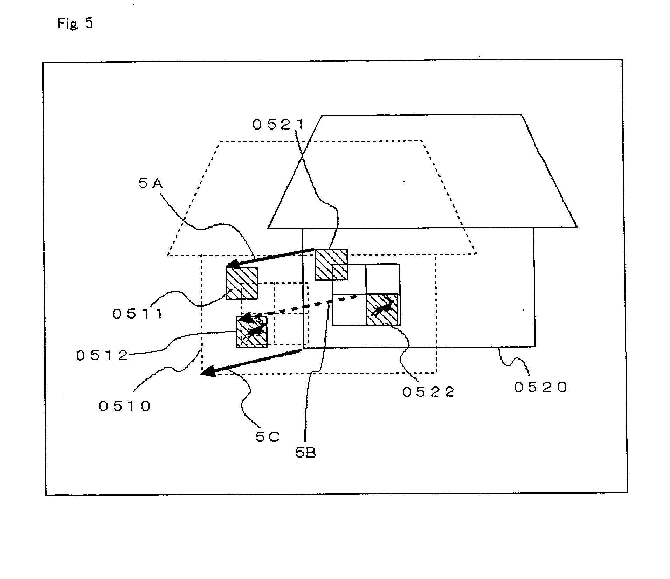

Hereinafter, comparison of intermediate information of respective units of coding will be described with reference to Fig. 3 to 5. In the first embodiment, the case where said intermediate information is the amount of code of respective units of coding will be described. At the outset, the case of coding of an image of a building will be described. In the coding of intra-frame prediction, the unit of coding 0320 is a portion of window frame of the building 0300, and expresses an outline, thereby including a large amount of code. Meanwhile, the unit of coding 0310 is a portion of white wall of a building 0300, thereby including a small amount of code. In the subsequent frame, when acquiring amount of image blurring, the motion vector of the unit of coding 0320 is more credible than that of the unit of coding 0310. The reason for this is that the image included in the unit of coding 0320 is the portion of window frame, so that it is characteristic and there is no similar portion in the image of Fig. 3. Meanwhile, the unit of coding 0310 is the portion of the wall of the building 0300, so that it is similar to the other portion, and is not characteristic in the frame. Note that in the first embodiment, it is described that the unit of coding including a large amount of code is more characteristic, but there is a case where the unit of coding including a small amount of code is more characteristic. For example, in cases where a person stands in front of a waterfall, there are many units of coding including a large amount of code, so that the units of coding including a small amount of code are more characteristic. In this case, there are fewer portions similar to the units of coding including a small amount of code, so that it is more credible. Accordingly, it is possible to relatively determine whether the units of coding including a large amount of code are more characteristic or the units of coding including a small amount of code are more characteristic. Normally, the units of coding including a large amount of code are more characteristic in the case of a natural image. Therefore, in this specification, the description will be made assuming that the units of coding including a large amount of code are more characteristic. Subsequently, a concrete description will be made with reference to Fig. 4. Due to image blurring, the building of Fig. 4 is photographed at the position of the building 0420 indicated by a solid line in the subsequent frame of the frame in which the building is at the position of the building 0410 indicated by a perforated line. Here, as to the unit of coding 0421, the similar portion 0411 in the preceding frame is selected, so that the motion vector 4A is acquired. Meanwhile, as to the unit of coding 0422, the similar portion 0424 could possibly be selected by mistake, so that the motion vector 4C can be acquired. Therefore, there is a possibility that the similar portion 0423 in the preceding frame is not selected, so that the motion vector 4B is not acquired. Accordingly, in cases where the type of coding is the intra-frame prediction, the unit of coding including a large amount of code is more credible when detecting amount of image blurring. Subsequently, in cases where the type of coding is the inter-frame prediction will be described with reference to Fig. 5. Due to image blurring, the building of Fig. 5 is photographed at the position of the building 0520 indicated by a solid line in the subsequent frame of the frame in which the building is at the position of the building 0510 indicated by a perforated line. Here, as to the unit of coding 0521, in cases where the motion vector 5A for the similar portion 0511 in the preceding frame is acquired, the difference between images included in the unit of coding is small, so that the amount of code is also small. Meanwhile, as to the unit of coding 0522, in cases where the motion vector 5B for the similar portion 0512 in the preceding frame is acquired, due to the difference between the potions of window frames, the difference between images included in the unit of coding is large, so that the amount of code is also large. Thus, in many cases, a large amount of code in the inter-frame prediction results not only from image blurring but also from motion of an object or from a failure of motion prediction. Accordingly, contrary to the case of intra-frame prediction, the unit of coding including a small amount of code is more credible when detecting amount of image blurring. Therefore, depending on the type of coding, the credibility according to the amount of code included in the unit of coding is different.

The detecting unit for amount of image blurring (0140) detects amount of blurring of the image signal acquired by said acquisition unit for image signal by means of weighting of said intermediate information. An example of detection of image blurring includes determination of the amount of image blurring by means of motion vector and weighting of intermediate information of respective units of coding. Since the motion vector can be caused by image blurring, by actual motion of an object, or by a failure of motion prediction, in order to clarify that the motion vector of which unit of coding is used for determining the amount of image blurring, the weighting of intermediate information is used. The determination unit for weight of unit of coding (0150) determines weight of respective units of coding in said detecting unit for amount of image blurring based on the comparison result by said comparing unit for intermediate information. For example, in cases where the type of coding is intra-frame prediction, as to the unit of coding including a large amount of code, large weight is given because of its high credibility in detecting image blurring, and as to the unit of coding including a small amount of code, small weight is given. The weight may be determined based on a table, which is preliminary provided based on the amount of code, or may be relatively determined based on the average value of the amount of code in a frame. For example, 'weight=1' is given to the units of coding including a larger amount of code than a predetermined amount, and 'weight=0' is given to the other units of coding. After that, image blurring is detected by means of an average value of motion vectors only of the units of coding, which has been given 'weight=1'. Meanwhile, in cases where the type of coding is inter-frame prediction, as to the unit of coding including a small amount of code, its credibility in detecting image blurring, so that large weight is given, and, small weight is given to the unit of coding including a large amount of code. Thus, in either case where the type of coding is intra-frame prediction or where the type of coding is inter-frame prediction, larger weight is given to the unit of coding having the motion vector similar to the amount of image blurring, so that the detection of image blurring becomes more accurate. The detection of the image blurring may be carried out by means of any one or both of the weight of intra-frame prediction and the weight of inter-frame prediction. In cases involving both weights, their average value may be used. Examples of information indicating amount of image blurring include information indicating size and direction, such as a vector, and information indicating a frame including the vector. The respective units of the present invention are configured by hardware, software, or both hardware and software. For example, in the case of using a computer, the respective units are implemented by the hardware configured by a CPU, a memory, a bus, an interface, and other peripheral devices etc., and by the software operatable on the hardware. Specifically, by sequentially carrying out programs on the memory, the data on the memory and the data inputted via the interface are processed, stored, and outputted etc., thereby implementing functions of the respective units (the same is applied through the entire specification).

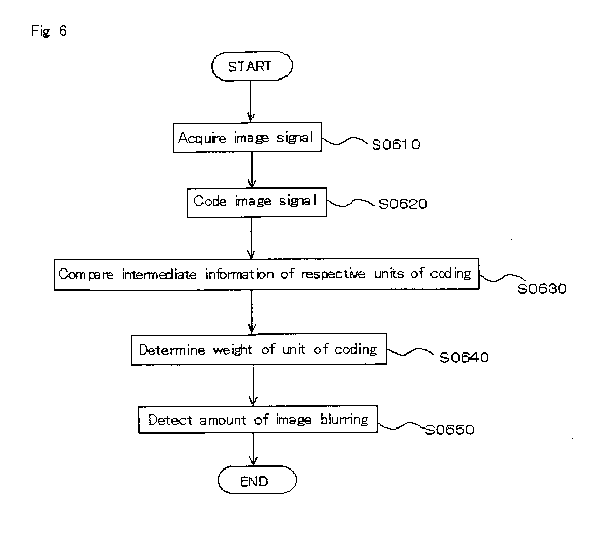

Fig. 6 is a flow chart explaining processing flow of the first embodiment. The method for operating imaging apparatus, comprising an acquisition step for image signal (S0610), which acquires an image signal, a coding step for image signal (S0620), which performs coding of said image signal, a comparing step for intermediate information (S0630), which compares intermediate information of respective units of coding, which is generated from the image signal, and is used for said coding, a determination step for weight of unit of coding (S0640), which determines weight of respective units of coding in said detecting step for amount of image blurring based on the comparison result by said comparing step for intermediate information, and a detecting step for amount of image blurring (S0650), which detects amount of blurring of the image signal acquired by said acquisition step for image signal by means of weighting of said intermediate information. According to the imaging apparatus of the present invention, detection of image blurring is carried out by means of intermediate information of respective units of coding generated upon coding of image signal without a sensor for detecting motion of the imaging apparatus, so that it becomes possible to install a function of correcting camera shake on a device such as a mobile phone. Moreover, weighting of respective units of coding enables selecting a unit of coding optimum for correcting camera shake, so that it becomes possible to efficiently provide the function of accurate correction of camera shake.

### (Second embodiment)

The second embodiment is an imaging apparatus, similar to the first embodiment, wherein weighting is carried out for selecting an optimum unit of coding when detecting image blurring. Moreover, the second embodiment comprises an inputting unit for image signal, and a data storing unit in addition to the first embodiment.

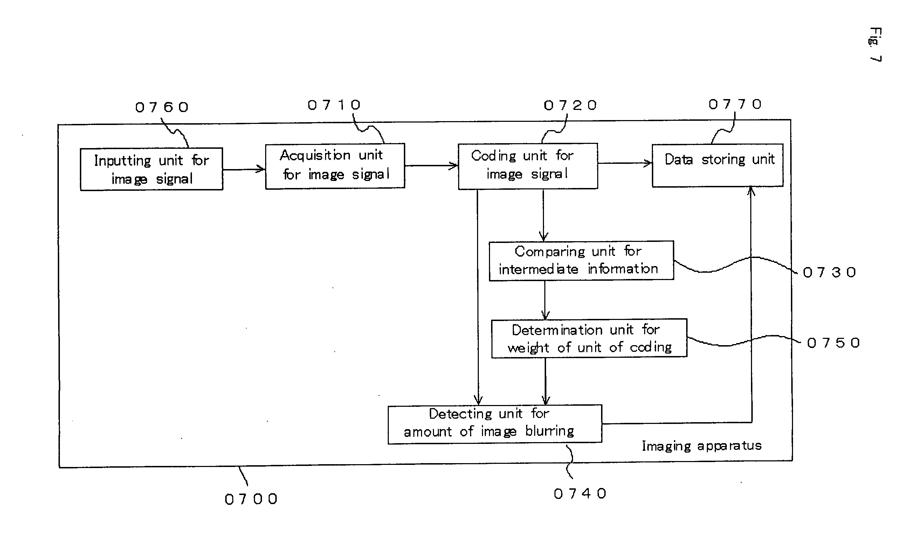

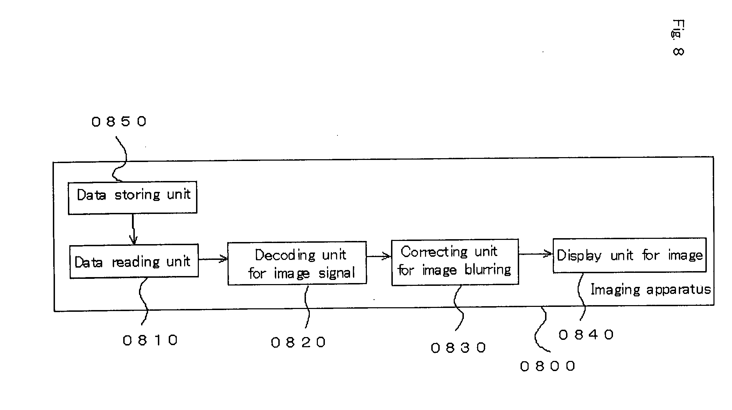

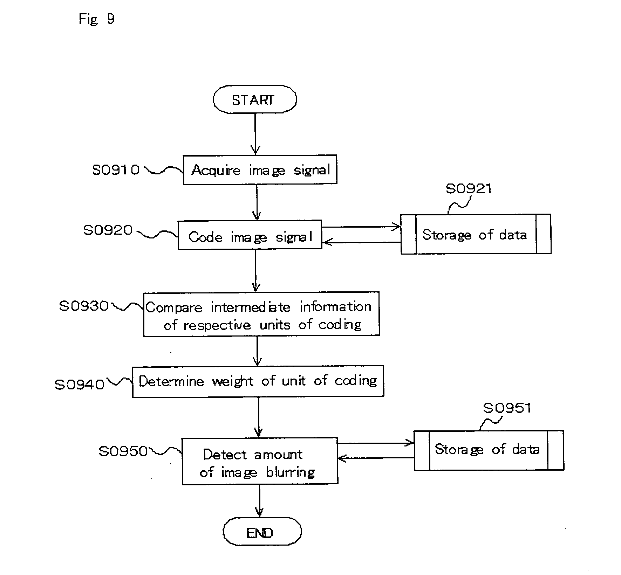

Fig. 7 is a functional block diagram explaining the second embodiment. In Fig. 7, an imaging apparatus (0700) comprises an acquisition unit for image signal (0710), a coding unit for image signal (0720), a comparing unit for intermediate information (0730), a detecting unit for amount of image blurring (0740), a determination unit for weight of unit of coding (0750), an inputting unit for image signal (0760), and a data storing unit (0770). The configuration excluding the 'inputting unit for image signal' (0760) and the 'data storing unit' (0770) is the same as that of the first embodiment, so that the description will be omitted. Further, the 'inputting unit for image signal' (0760) has been described in the first embodiment, so that the description will be omitted. The 'data storing unit' (0770) stores the image signal coded by said coding unit for image signal and the amount of image blurring detected by said detecting unit for amount of image blurring. The data storing unit may be a recording medium, which can be separated from the image processing apparatus, or may be the recording medium, which includes a disk medium, for example, magnetic disk such as magnetic tape or cassette tape, or optical disk such as CD-ROM, CD-R/RW, MO, MD, DVD-ROM, DVD-RAM, or DVD-RW, a card medium such as a PC card, CompactFlash (registered trademark), SmartMedia (registered trademark), IC card, or SDcard (registered trademark), or MemoryStick (registered trademark), or semiconductor memory such as RAM, EEPROM, or flash ROM. By storing both coded image signal and amount of image blurring, it becomes possible to reproduce image without image blurring upon reproduction of image. In addition, by the configuration, it becomes possible for a user to select whether or not correction of image blurring is carried out by means of the stored amount of image blurring when reproducing image signal. Further, Fig. 8 exemplifies an imaging apparatus, which reproduces and displays image signal by means of coded image signal and amount of image blurring, which have been stored in the data storing unit, and comprises a data reading unit (0810), a decoding unit for image signal (0820), a correcting unit for image blurring (0830), an image display unit (0840), and a data storing unit (0850). The data reading unit (0810) reads the coded image signal and amount of image blurring stored in the data storing unit. The decoding unit for image signal (0820) decodes the coded image signal. The correcting unit for image blurring (0830) corrects the image blurring of said image signal based on the amount of image blurring read by said data reading unit. As an example of a method for correcting image blurring, a predetermined domain of an image is extracted, the picture is parallel translated, and the parallel-translated picture is transmitted to the image display unit. The image display unit (0840) displays the image signal, in which image blurring is corrected. An example of the image display unit includes a display such as an LCD monitor. Note that, the respective units of Fig. 8 and the imaging apparatus of Fig. 7 may be integrated.

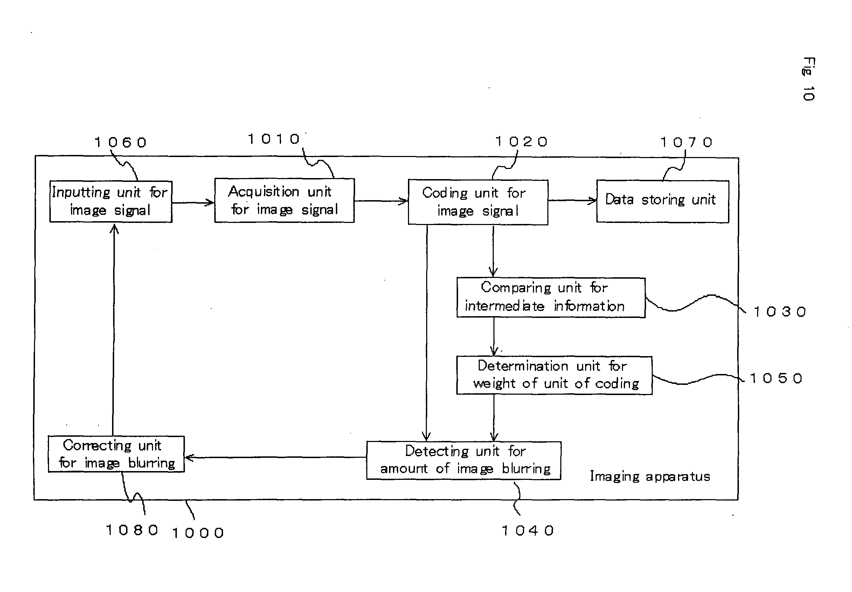

Fig. 9 is a flow chart explaining the processing flow of the second embodiment. The method for operating imaging apparatus of the second embodiment comprises an acquisition step for image signal (S0910), a coding step for image signal (S0920), a comparing step for intermediate information (S0930), a data storing step (S0921 and S0951), a determination step for weight of unit of coding (S0940), and a detecting step for amount of image blurring (S0950). The image processing apparatus of the second embodiment stores the coded image signal and optimum amount of image blurring together, so that it becomes possible to reproduce image, in which image blurring is removed.

### (Third embodiment)

The third embodiment is an imaging apparatus, similar to the second embodiment, wherein weighting is carried out for selecting an optimum unit of coding when detecting image blurring. Moreover, in addition to the second embodiment, real-time correction is carried out by predicting the amount of image blurring of the image signal to be inputted.

Fig. 10 is a functional block diagram explaining the third embodiment. In Fig. 10, an imaging apparatus (1000) comprises an acquisition unit for image signal (1010), a coding unit for image signal (1020), a comparing unit for intermediate information (1030), a detecting unit for amount of image blurring (1040), a determination unit for weight of unit of coding (1050), an inputting unit for image signal (1060), and a data storing unit (1070), and a correcting unit for image blurring (1080). The configuration excluding the correcting unit for image blurring (1080) is the same as that of the second embodiment, so that the description will be omitted. The correcting unit for image blurring (1080) of the third embodiment corrects image blurring based on the amount of image blurring detected by said detecting unit for amount of image blurring. In an example of correction described in the third embodiment, the amount of image blurring is transmitted to the inputting unit for image signal, and a lens between an image sensor and an object is moved, or a position of read domain in the image sensor is changed, so that correction of image blurring is carried out. Thus, by predicting image blurring in the future based on the current amount of image blurring, it becomes possible to carry out real-time correction of image blurring for the image signal to be inputted by the inputting unit for image signal. This is more effective in the case of photographing at the seaside where a camera is prone to shaking and image blurring continuously occurs under windy conditions.

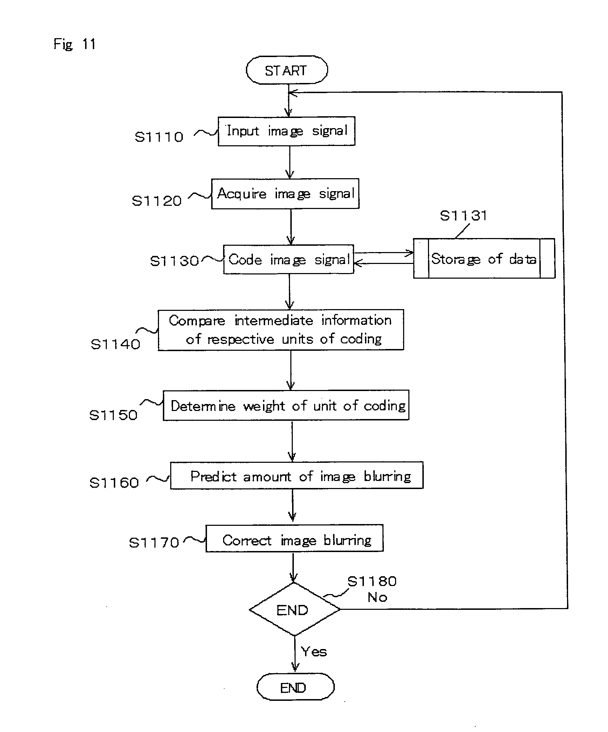

Fig. 11 is a flow chart explaining the processing flow of the third embodiment. The method for operating imaging apparatus of the third embodiment comprises an inputting step for image signal (S1110), an acquisition step for image signal (S 1120), a coding step for image signal (S1130), a data storing step (S1131), a comparing step for intermediate information (S1140), a determination step for weight of unit of coding (S1150), a prediction step for amount of image blurring (S1 160), and a correcting step for image blurring (S1170). The imaging apparatus of the third embodiment comprises the correcting unit for image blurring, so that it becomes possible to carry out correction of image blurring based on the amount of image blurring detected by the detecting unit for amount of image blurring. In addition, information from the correcting unit for image blurring is transmitted to the inputting unit for image signal, so that it becomes possible to carry out prediction of the amount of image blurring, and to carry out real-time correction of image blurring for the image signal to be inputted by the inputting unit for image signal.

### (Fourth embodiment)

According to an imaging apparatus of the fourth embodiment, differently from the first embodiment, the detection of image blurring is carried out by means of intermediate information of respective units of coding generated upon decoding of image signal. In addition, in order to select an optimum unit of coding when detecting the amount of image signal, weighting of respective units of coding is carried out.

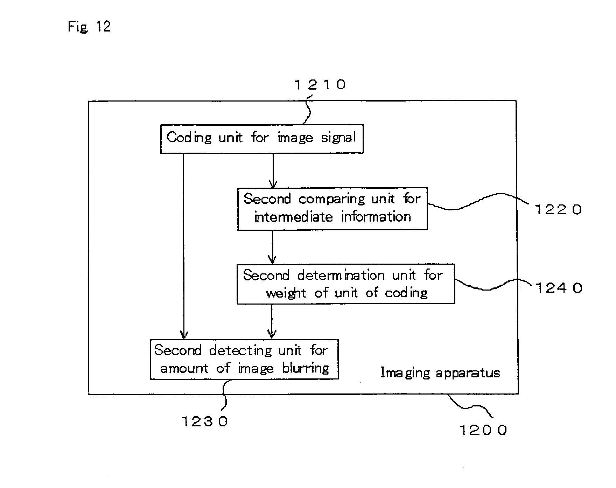

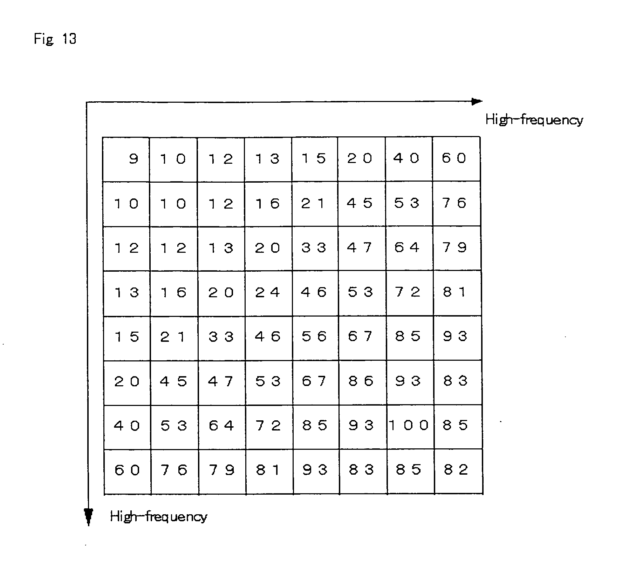

Fig. 12 is a functional block diagram explaining the fourth embodiment. An imaging apparatus (1200) of the fourth embodiment comprises a 'decoding unit for image signal' (1210), a 'second comparing unit for intermediate information' (1220), a 'second detecting unit for amount of image blurring' (1230), and a 'second determination unit for weight of unit of coding' (1240). The decoding unit for image signal (1210) performs decoding of coded image signal. In order to carry out decoding of image signal, processing, which is an inverse processing of coding image signal, is carried out. For example, variable length decoding of the coded image signal is carried out, and inverse quantization and inverse orthogonal transformation are carried out, so that the image signal is decoded. The second comparing unit for intermediate information (1220) compares second intermediate information of respective units of coding, which is used for said decoding. Said intermediate information may be evaluated value, which is acquired by carrying out orthogonal transformation of texture of the respective units of coding, and integration for exposing high-frequency component of the transformed component. The texture is picture information of image in object-based coding. The transformed component is, for example, a coefficient acquired by orthogonal transformation. The integration for exposing high-frequency component is carried out for exposing the unit of coding, in which many high-frequency components are included in the transformed components. Fig. 13 exemplifies coefficients used for the integration for exposing high-frequency component. Hereinbelow, although the processing in coding image signal will be described, of course, it is also possible in decoding. In a normal processing of coding, division is carried out for the component acquired by the orthogonal transformation by means of the coefficient indicated in Fig. 13, so that quantization for high-frequency component is carried out. However, in the integration for exposing high-frequency component of the fourth embodiment, contrary to the quantization, multiplication is carried out by means of the coefficient indicated in Fig. 13. This makes it possible to expose the unit of coding, which includes many high-frequency components. The evaluated value is a summation of all values acquired by the multiplication by means of the coefficient indicated in Fig. 13. As the evaluated value becomes higher, more high-frequency components exist. The second detecting unit for amount of image blurring (1230) detects amount of blurring of the coded image signal by means of weighting of said second intermediate information. The second determination unit for weight of unit of coding (1240) determines weight of respective units of coding in said second detecting unit for amount of image blurring based on the comparison result by said second comparing unit for intermediate information. The weighting is different depending on type of coding. In the case of intra-frame prediction, since the unit of coding including characteristic image is more credible, a large weight is given to the unit of coding including many high-frequency components. Therefore, a large weight is given to the unit of coding having a high evaluated value, and a small weight is given to the unit of coding having a low evaluated value. Meanwhile, in the case of inter-frame prediction, since a small difference between the frame and the preceding frame is more credible, a large weight is given to the unit of coding including few high-frequency components. Therefore, a large weight is given to the unit of coding having low evaluated value.

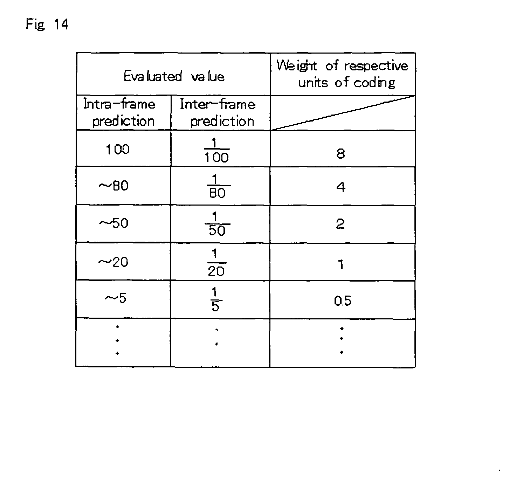

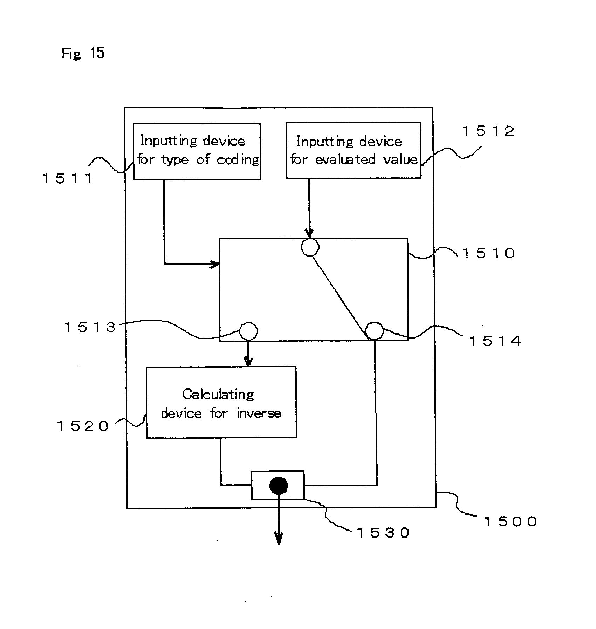

Note that said determination unit for weight of unit of coding may comprise determination means for inverse, which determines weighting value, so that the value of intermediate information used for inter-frame prediction is an inverse of the value of intermediate information used for intra-frame prediction, in which same weighting value is used for the values of the intermediate information. Fig. 14 is a table used for weighting in which the intermediate information is evaluated value. This makes it unnecessary to reference different tables indicating weights for each of the intra-frame predictions and the inter-frame predictions, thereby enabling easier implementation. Fig. 15 is a functional block diagram of the determination means for inverse. A determination step for inverse (1500) inputs the evaluated value by an inputting device for evaluated value (1512) and outputs the weight by an outputting device for weight (1530). Further, the identification signal identifying intra-frame prediction or inter-frame prediction is inputted to the inputting device for type of coding (1511). If the input to the inputting device for type of coding (1511) indicates the intra-frame prediction, a switch (1510) carries out output from an edge point for output (1514), and the evaluated value inputted to the inputting device for evaluated value (1512) is outputted from the outputting device for weight (1530). Meanwhile, if the input to an inputting device for type of coding (1511) indicates the inter-frame prediction, the switch (1510) carries out output from an edge point for output (1513), and the evaluated value is outputted to a calculating device for inverse (1520). The calculating device for inverse (1520) calculates an inverse of the evaluated value. After that, the weight is outputted from the outputting device for weight (1530). This makes it unnecessary to reference the different table indicating weights for each of the intra-frame prediction and the inter-frame prediction. Although the intermediate information of the fourth embodiment is the evaluated value as described above, of course, it may be the amount of code of respective units of coding. Moreover, of course, the intermediate information of any one of the first to fourth embodiments may be the evaluated value.

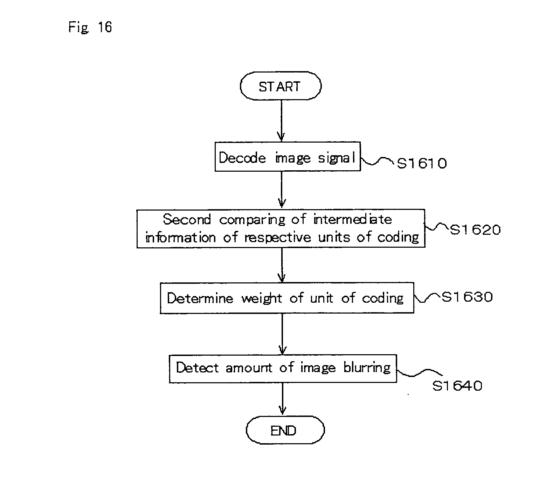

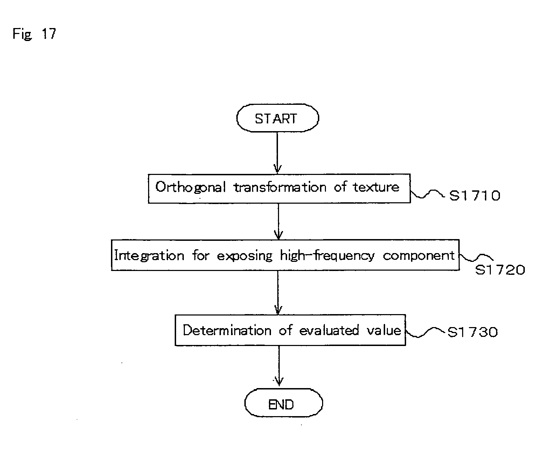

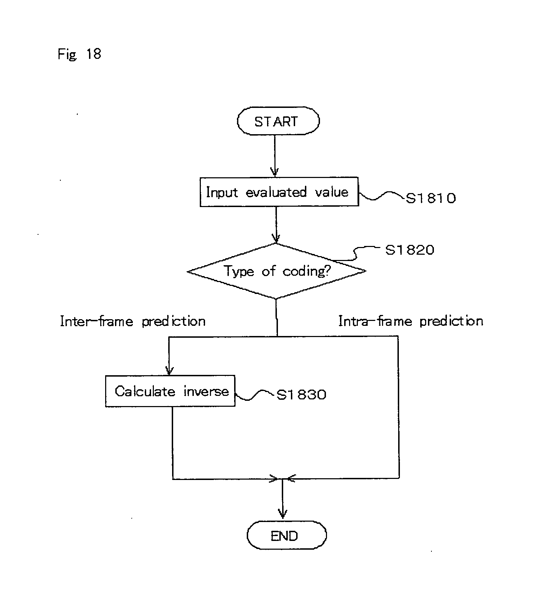

Fig. 16 is a flow chart explaining the processing flow of the fourth embodiment. The method for operating imaging apparatus of the fourth embodiment comprises a decoding step for image signal (S1610), a second comparing step for intermediate information (S1620), a second determination step for weight of unit of coding (S 1630), and a detecting step for amount of image blurring (51640). Fig. 17 is a flow chart explaining processing flow of determination of an evaluated value. The determination method for evaluated value of Fig. 17 comprises an orthogonal transformation step for texture (S1710), a step of integration for exposing high-frequency component (S1720), and a determination step for evaluated value (S1730). Fig. 18 is a flow chart explaining the processing flow of calculation of an inverse. The determination method for inverse of Fig. 17 comprises an inputting step for evaluated value (S1810), a determination step for type of coding (S1820), and a calculation step for inverse (S1830), which calculates an inverse according to the determination by the determination step for type of coding. In the fourth embodiment, the intermediate information used for decoding of the image signal can be used, so that it becomes possible to carry out detection of optimum amount of image blurring even when information regarding the amount of image blurring is not added to the image signal. In addition, it becomes possible to determine the value of weight, so that the value of intermediate information used for inter-frame prediction is an inverse of the value of intermediate information used for intra-frame prediction, in which same weighting value is used for the values of the intermediate information, thereby enabling easier implementation.

### (Fifth embodiment)

According to an imaging apparatus of the fifth embodiment, similar to the fourth embodiment, the detection of image blurring is carried out by means of intermediate information of respective units of coding generated upon decoding of image signal, and in order to select an optimum unit of coding when detecting the amount of image signal, weighting of respective units of coding is carried out. In addition to the fourth embodiment, the imaging apparatus of the fifth embodiment further comprises a data reading unit, a correcting unit for image blurring, and a display unit for image.

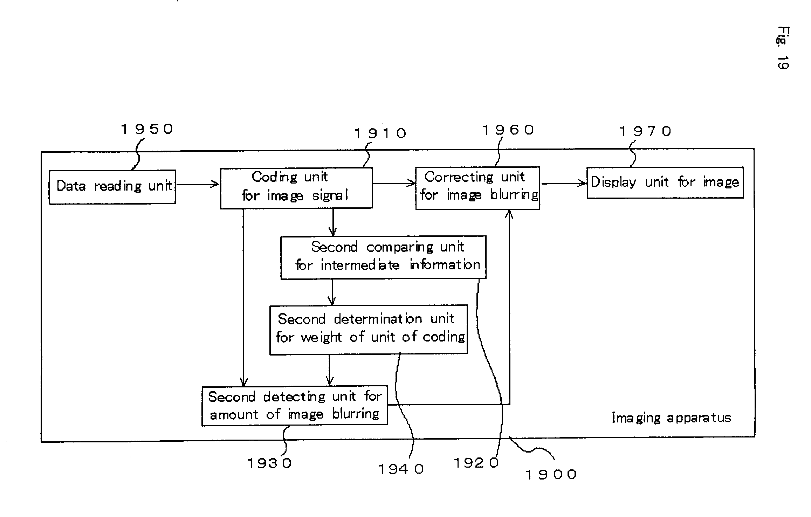

Fig. 19 is a functional block diagram explaining the fifth embodiment. An imaging apparatus (1900) of the fifth embodiment comprises a 'decoding unit for image signal' (1910), a 'second comparing unit for intermediate information' (1920), a 'second detecting unit for amount of image blurring' (1930), a 'second determination unit for weight of unit of coding' (1940), a 'data reading unit' (1950), a 'correcting unit for image blurring' (1960), and a 'display unit for image' (1970).

The configuration excluding the data reading unit (1950), the correcting unit for image blurring (1960), and the display unit for image (1970) is the same as that of the fourth embodiment, so that the description will be omitted. Further, the data reading unit (1950), the correcting unit for image blurring (1960), and the display unit for image (1970) have been described, so that the description will be omitted. According to the fifth embodiment, it becomes possible to detect the optimum amount of image blurring when decoding of image signal, to correct the image blurring based on the detected amount of image blurring, and to display the corrected image. In addition, when decoding the image signal, it is possible to detect the amount of image blurring, so that it becomes possible to display the image, in which the image blurring is corrected, even if the image signal does not include the information regarding amount of image blurring.

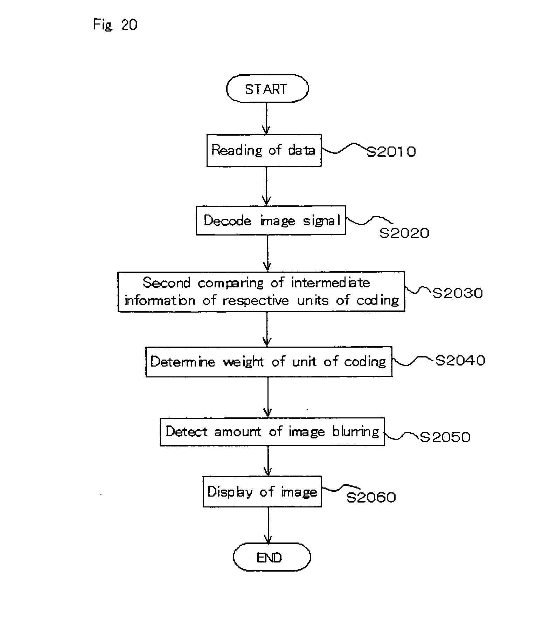

Fig. 20 is a flow chart explaining processing flow of the fifth embodiment. The method for operating imaging apparatus of the fifth embodiment comprises a data reading step (S2010), a decoding step for image signal (S2020), a second comparing step for intermediate information (S2030), a second determination step for weight of unit of coding (S2040), a detecting step for amount of image blurring (S2050), and a display step for image (S2060). According to the imaging apparatus of the fifth embodiment, when decoding the image signal, it is possible to detect the amount of image blurring, so that it becomes possible to display the image, in which the image blurring is corrected, even if the image signal does not include the information regarding amount of image blurring.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An imaging apparatus, comprising:
an acquisition unit for image signal, which acquires an image signal;
a coding unit for image signal, which performs coding of said image signal;
a comparing unit for intermediate information, which compares intermediate information of respective units of coding, which is generated from the image signal, and is used for said coding;
a detecting unit for amount of image blurring, which detects amount of blurring of the image signal acquired by said acquisition unit for image signal by means of weighting of said intermediate information; and
a determination unit for weight of unit of coding, which determines weight of respective units of coding in said detecting unit for amount of image blurring based on the comparison result by said comparing unit for intermediate information.

2. An imaging apparatus, comprising:
a decoding unit for image signal, which performs decoding of coded image signal;
a second comparing unit for intermediate information, which compares second intermediate information of respective units of coding, which is used for said decoding;
a second detecting unit for amount of image blurring, which detects amount of blurring of the coded image signal by means of weighting of said second intermediate information; and
a second determination unit for weight of unit of coding, which determines weight of respective units of coding in said second detecting unit for amount of image blurring based on the comparison result by said second comparing unit for intermediate information.

3. The imaging apparatus according to Claim 1 or 2, wherein
said intermediate information is amount of code of respective units of coding;

4. The imaging apparatus according to Claim 1 or 2, wherein
said intermediate information is evaluated value, which is acquired by carrying out orthogonal transformation of texture of the respective units of coding, and integration for exposing high-frequency component of the transformed component.

5. The imaging apparatus according to Claim 4, wherein
said determination unit for weight of unit of coding comprises,
a determination means for inverse, which determines weighting value, so that the value of intermediate information used for inter-frame prediction is an inverse of the value of intermediate information used for intra-frame prediction, in which same weighting value is used for the values of the intermediate information.

6. A method for operating imaging apparatus, comprising:
an acquisition step for image signal, which acquires an image signal;
a coding step for image signal, which performs coding of said image signal;
a comparing step for intermediate information, which compares intermediate information of respective units of coding, which is generated from the image signal, and is used for said coding;
a detecting step for amount of image blurring, which detects amount of blurring of the image signal acquired by said acquisition step for image signal by means of weighting of said intermediate information; and
a determination step for weight of unit of coding, which determines weight of respective units of coding in said detecting step for amount of image blurring based on the comparison result by said comparing step for intermediate information.

7. A method for operating imaging apparatus, comprising:
a decoding step for image signal, which performs decoding of coded image signal;
a second comparing step for intermediate information, which compares second intermediate information of respective units of coding, which is used for said decoding;
a second detecting step for amount of image blurring, which detects amount of blurring of the coded image signal by means of weighting of said second intermediate information; and
a second determination step for weight of unit of coding, which determines weight of respective units of coding in said second detecting step for amount of image blurring based on the comparison result by said second comparing step for intermediate information.

8. The method for operating imaging apparatus according to Claim 6 or 7, wherein
said intermediate information is amount of code of respective units of coding;

9. The method for operating imaging apparatus according to Claim 6 or 7, wherein
said intermediate information is evaluated value, which is acquired by carrying out orthogonal transformation of texture of the respective units of coding, and integration for exposing high-frequency component of the transformed component.

10. The method for operating imaging apparatus according to Claim 9, wherein
said determination step for weight of unit of coding comprises,
a determination step for inverse, which determines weighting value, so that the value of intermediate information used for inter-frame prediction is an inverse of the value of intermediate information used for intra-frame prediction, in which same weighting value is used for the values of the intermediate information.
